Europäisches Patentamt

European Patent Office

Office européen des brevets

(11) Publication number: 0 386 866 A2

# EUROPEAN PATENT APPLICATION

(21) Application number: 90300251.7

(22) Date of filing: 10.01.90

(51) Int. Cl.5: **F16H 35/04**

The title of the invention has been amended (Guidelines for Examination in the EPO, A-III, 7.3).

(30) Priority: 11.01.89 ZA 890228
04.12.89 ZA 899244

(43) Date of publication of application:
12.09.90 Bulletin 90/37

(84) Designated Contracting States:
DE FR GB IT SE

(71) Applicant: **DIE KEES TRUST**
**Trustfontein Building 151 St. Andrews Street**
**Bloemfontein Orange Free State(ZA)**

(72) Inventor: **Van der Walt, Christiaan Johannes**
**649 Rubenstein Avenue, Morelettapark**
**Pretoria, Transvaal Province(ZA)**

(74) Representative: **Spall, Christopher John et al**
**BARKER, BRETTELL & DUNCAN 138 Hagley**
**Road**
**Edgbaston Birmingham B16 9PW(GB)**

(54) **Mechanical differential.**

(57) A differential speed gear device has a drive shaft (12) and first and second driven shafts (14). Forward drive transmission means includes first and second forward overrun devices (18) respectively for the first and second driven shafts. Each overrun device (18) is adapted to transmit drive proportionally to the speed of the input and such as to allow overruning in one predetermined direction only. Reverse drive transmission means (20) includes first and second reverse overrun devices respectively for the first and second driven shafts. Each overrun device is adapted to transmit drive proportionally to the speed of the input and to allow overrunning in one direction opposite to said predetermined direction only. Selector means (30, 34, 32) is responsive to the direction of rotation of the drive shaft automatically to effect coupling of an appropriate one of the forward and reverse drive transmission means between the drive shaft and each of the first and second driven shafts. Each of the overrun devices comprises advantageously a drive component and a driven component which are concentric, and which are frictionally lockable to effect drive and releasable to allow overrunning in the respective one direction only. A vehicle has a plurality of axles of which at least two are driven. Each driven axle is associated with a differential speed gear device as described above and which is permanently drivingly connected to a drive motor of a vehicle.

FIG 1

## TRANSMISSION COMPONENT

THIS INVENTION relates to a transmission component. It relates more specifically to a differential speed gear device and to a vehicle incorporating such a differential speed gear device.

The Inventor believes that the invention will be particularly suitable for application in the transmission of a wheeled vehicle. The specification will generally refer to that application. The invention is however not limited to that application.

The differential gear system commonly used in self-propelled, steerable motor vehicles is adapted to allow differential speed in drive wheels to be accommodated, such as when the vehicle is steered. Such a differential gear system has the disadvantage that torque is directed to the side offering the lesser resistance. Thus, if one wheel loses traction, no torque or virtually no torque is transmitted to the other wheel, and all of the torque or virtually all of the torque is transmitted to the slipping wheel, causing the vehicle to become stuck.

One attempted solution to this problem is the so-called "limited slip differential" which allows a limited amount only of differential speed, say 25%. Disadvantages of that solution are complication and costs.

Another attempted solution is to provide separate brakes (hand brake fashion) for the two side shafts. When a vehicle is stuck, the brake is applied to the side of that wheel which is slipping, thus creating artificial traction and causing torque to be transmitted to the other wheel which has traction. Disadvantages of that system is that it can only be applied in stationary or low speed situations and that it is manual, not automatic.

In yet a further attempted solution drive is transmitted from the drive shaft to side shafts via dog clutches having complemental drive formations which have to be meshed to transmit drive and demeshed to allow overrun. Because of the finite height of the drive formations, substantial lost motion has to be allowed for during such meshing and demeshing resulting in uneven and noisy operation. This problem is aggravated under some conditions of use, for example in a vehicle executing a gradual turn, when repeated meshing and demeshing take place. Attempts to solve that problem in that type of device were only partially successful and led to increased complication and costs.

It is an object of the present invention to provide a new solution to the problem of the common differential gear system explained above and which is superior to, or does not suffer the disadvantages of, the known solutions explained above.

It is a further object to provide a transmission component capable of differential action suitable for use in a transfer case transmission, eg for a four-wheel drive vehicle.

In accordance with a first aspect of the invention, there is provided a differential speed gear device comprising
a drive shaft;
first and second driven shafts;
forward drive transmission means including first and second forward overrun devices respectively for the first and second driven shafts and adapted to transmit drive proportionally to the speed of the input and such as to allow overrunning in one predetermined direction only;
reverse drive transmission means including first and second reverse overrun devices respectively for the first and second driven shafts and adapted to transmit drive proportionally to the speed of the input and to allow overrunning in one direction opposite to said predetermined direction only; and
selector means responsive to the direction of rotation of the drive shaft automatically to effect coupling of an appropriate one of the forward and reverse drive transmission means between the drive shaft and each of the first and second driven shafts.

Advantageously, each of the overrun devices may comprise a drive component and a driven component which are concentric, and which are frictionally lockable to effect drive and releasable to allow overrunning in the respective one direction only.

The Inventor is of opinion that that type of overrun device generally has little lost motion and is capable of smooth and silent operation.

The first and second forward and reverse overrun devices may respectively be axially spaced, and the selector means may include
a first transmission member drivingly connected to the drive shaft and axially displacable between forward and reverse positions in which it is, respectively, drivingly engaged with the first forward overrun device and released from the first reverse overrun device, and drivingly engaged with the first reverse overrun device and released from the first forward overrun device;
a second transmission member drivingly connected to the drive shaft and axially displacable between forward and reverse positions in which it is, respectively, drivingly engaged with the second forward overrun device and released from the second reverse overrun device, and drivingly engaged with the second reverse overrun device and released from the second forward overrun device; and
cam means responsive to the direction of rotation of the drive shaft to displace the first and second transfer members respectively toward their forward and reverse positions.

It is to be appreciated that the selector means will only operate when the rotary direction of drive of the drive shaft changes, for example, in the case of a road vehicle, when the vehicle is reversed after it has been driven forward.

In accordance with a second aspect of the invention, there is provided a vehicle having a plurality of axles of which at least two are driven, each driven axle being associated with a differential speed gear device in accordance with this invention, in which each differential speed gear device is permanently drivingly connected to a drive motor of the vehicle. This application is made possible by the ability of both wheels on an axle to free-wheel simultaneously.

In accordance with a third aspect of the invention, there is provided a vehicle having a plurality of axles of which at least two are driven, the vehicle comprising a transfer case including a differential speed gear device in accordance with this invention, in which a drive motor of the vehicle is drivingly connected to a drive shaft of the differential speed gear device, and driven shafts of the differential speed gear device lead respectively to the driven axles. This invention thus provides a viable alternative to known transfer cases incorporating differential speed gear devices.

The invention is now described by way of example with reference to the accompanying diagrammatic drawings. In the drawings

FIGURE 1 shows, in part axial section, a simplified embodiment of a differential speed gear system in accordance with the invention;

FIGURE 2 shows, schematically, transmission of drive in one direction of rotation;

FIGURES 3 and 4 correspond to Figure 1 but show developed embodiments;

FIGURE 5 shows, schematically, in axial view, a simplified embodiment of an overrun device of the kind this invention uses; and

FIGURES 6 and 7 show, schematically, two embodiments of vehicles using differential speed gear devices in accordance with this invention.

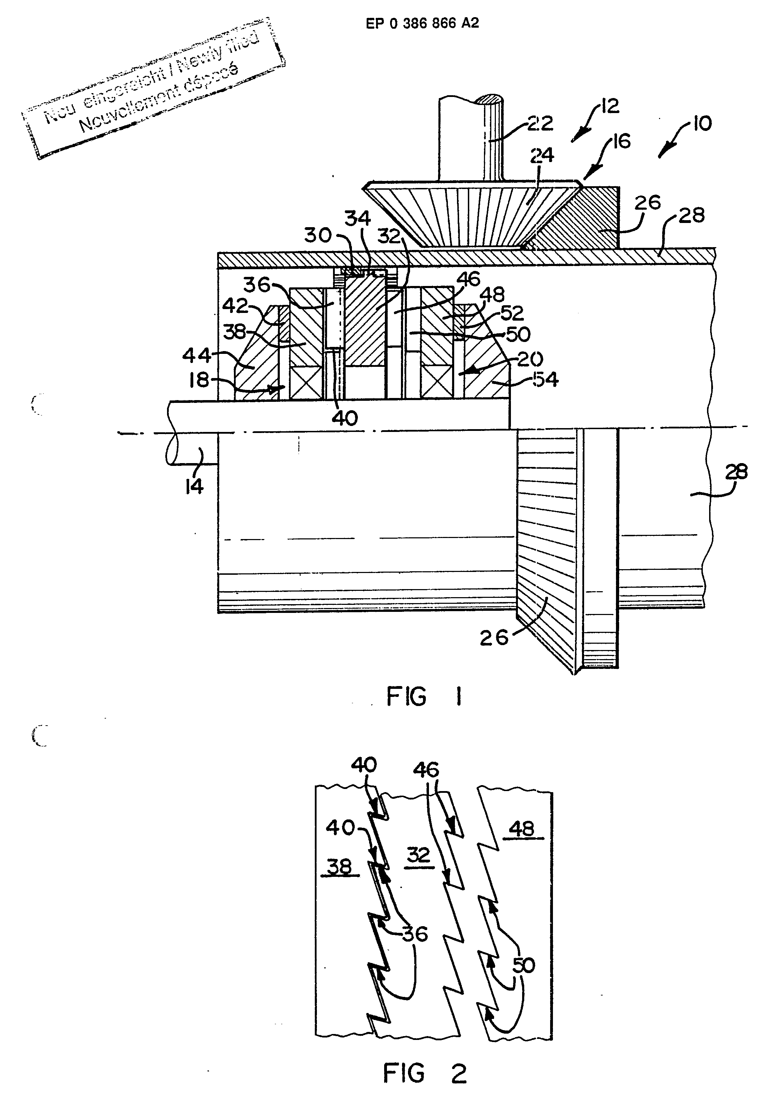

With reference to Figure 1 of the drawings, a differential speed gear system in accordance with the invention is generally indicated by reference numeral 10. The system 10 has a drive input 12, a pair of separate driven shafts or drive outputs of which only one is shown at 14, positive drive transmitting means generally indicated by reference numeral 16 and first and second forward and reverse overrun devices. Only the forward and reverse overrun devices associated with the one drive output 14 are shown at 18, 20. They are coaxial and are axially spaced.

The drive output which is not shown, its connection to the position drive transmitting means, and its associated forward and reverse overrun devices, are similar to those illustrated in the drawing and are not separately described or illustrated.

The drive input 12 comprises a drive shaft 22 and a pinion 24 at the end of the shaft 22.

The positive drive transmitting means 16 comprises a crown wheel 26 operatively engaged with the pinion 24 and a large diameter hollow shaft 28 on which the crown wheel 26 is fixed.

As mentioned above only the connection between the drive output 14 and the hollow shaft 28 is now described, it being understood that the components are duplicated for the other of the drive outputs.

Along a portion of its length, the hollow shaft 28 mounts internal helical splines 30. A transfer ring gear 32 has helical, peripheral teeth 34 complemental to and engaged with the helical, splined portion 30. The transfer ring gear 32 is mounted for lost motion and is axially displaceable to and fro between limits along the splined portion. The significance of this will become apparent hereinafter.

At one side of the transfer ring gear 32, it has lateral teeth 36. Correspondingly adjacent the transfer ring gear 32, there is provided an intermediate ring gear 38 having, at a corresponding side, complemental lateral teeth 40 which are engagable with the lateral teeth 36. The forward overrun device 18 is provided concentrically within and operatively connected to the intermediate ring gear 38. The forward overrun device 18 operates in a manner to be described hereinafter to connect the intermediate ring gear 38 and the drive output 14 for transmission of drive in one direction only (ie "forward"); and freely to allow relative rotation in the other direction, which is equivalent to overrunning in said one direction.

The transfer ring gear 32 also has lateral teeth 46 at its side opposite to the lateral teeth 36. Correspondingly, the system 10 comprises a second intermediate ring gear 48 at that side of the transfer ring gear 32. The intermediate ring gear 48 also has lateral teeth 50 complemental to and engageable with the lateral teeth 46.

Similarly, the intermediate ring gear 48 is connected via the reverse overrun device 20 to the drive output 14 for transmission of drive in the opposite direction (ie "reverse") and freely to allow relative rotation in the other direction, ie overrun or free-wheeling in the"reverse" direction.

As mentioned above, it is to be appreciated that the transfer ring gear 32 is displaceable axially selectively between "forward" and "reverse" positions in which it respectfully engages the teeth 36 of the intermediate ring gear 38 and the teeth 40 (as illustrated in the drawing) and engages the lateral teeth 46 and 50. It is to be understood that axial displacement to engage one set of teeth, automatically causes disengagement of the other set of teeth. The helical teeth 30, 34 and transfer ring gear 32 thus provide selector means in accordance with the invention.

It is further to be appreciated that transmission of drive via helical gear teeth generates axial thrust between the geared components. Thus, the direction and degree of slant of the splines 30 are selected, when drive is transmitted to the transfer ring gear 32 in a specific one direction, to cause axial displacement of the transfer ring gear 32 into driving engagement with an appropriate one of the intermediate ring gears 38, 48. In this manner, in response to the direction of rotation of the input 12, automatic selection is made between the forward and reverse overrun devices 18, 20 to transmit drive in a corresponding direction to the output 14. The helical gear teeth act as cam means in accordance with the invention.

By way of development, to allow selection at speed, synchromesh means is provided for each of the intermediate ring gears 38 and 48. A synchromesh ring 44, 54 is provided in each case and having a friction pad 42, 52 lightly frictionally engaging a side of the intermediate ring gear 38, 48 to rotate the intermediate ring gears 38, 48 in synchronism with the drive output 14 regardless of whether or not driving connection is effected by the respective overrun devices 18, 20. It is however to be appreciated that frictional engagement is light only, so as not to prevent or hinder differential speed accommodation.

Assume, for example, that the differential speed gear system 10 is assembled in a motor vehicle capable of forward and reverse motion. Further assume that the "forward" overrun device 18 is adapted to effect interconnection between the intermediate ring gear 38 and the drive output 14 for forward motion and the "reverse" overrun device 20 is adapted to effect interconnection between the intermediate ring gear 48 and the drive output 14 for reverse motion. The arrangement for the second drive output is similar.

The condition of the system 10 and more specifically the position of the transfer ring gear 32 as illustrated in Figure 1 allows the vehicle to be driven in a forward direction. Also bear in mind that a similar driving connection will be effected to the second drive output. Further assume that the drive output 14 is connected to a left drive wheel of the vehicle and that the other drive output is connected to the right drive wheel of the vehicle. Assume now that the vehicle is steered to the right resulting in the left drive wheel having to rotate faster because it negotiates a curve of larger radius than the right wheel. Driving connection between the drive shaft 22 and each of the drive outputs is such that each drive output is driven at a speed proportional to the speed of the drive shaft 22. Thus, when the vehicle is steered to the right, the slower of the drive wheels, i.e. the right drive wheel, will be driven at said speed proportional to the speed of the drive shaft 22. The left drive wheel has to turn faster which is freely allowed by operation of the forward overrun device 18.

Now assume that the vehicle gets bogged down in mud and loses traction. The drive wheel retaining traction will be driven at the speed proportional to the speed of the drive shaft 22 and the vehicle will thus still be driven forward by the one drive wheel which has retained traction.

As described above, the system 10 accommodates differential speed between the pair of drive outputs and also has the advantage that drive transmission to a wheel retaining traction when the opposite wheel has lost traction continues. It is further to be appreciated that such drive transmission to the wheel which retains traction takes place at the speed proportional to the speed of the drive shaft 22 and not at a reduced speed as in the case of a limited slip differential. It is further to be appreciated that it takes place automatically and at speed, i.e. it need not be effected manually and it need not be effected when stationary or at slow speed.

When the vehicle is to be driven in reverse, the transfer ring gear 32 is automatically displaced on account of the helical nature of the splines 30, 34 such that the lateral teeth 36 disengage from the lateral teeth 40 of the intermediate ring gear 38 and such that the lateral teeth 46 engage the lateral teeth 50 of the intermediate ring gear 48 connected via the reverse overrun device 20 to the drive output 14 for reverse rotation.

The corresponding components associated with the other drive output are treated similarly. Operation when the vehicle is driven in reverse is similar to what has been described above for forward motion.

One embodiment to effect engagement and disengagement of the lateral teeth 36, 46 with the lateral teeth 40, 50 of the intermediate ring gears 38, 48 is now described by way of example with reference to Figure 2.

The working faces of the lateral teeth 36, 46 and 40, 50 are slightly oblique such as to effect an engaging force tending to draw the components together with pressure is applied between the tooth faces. Thus, assume that the transfer gear ring 32 is in an intermediate position in between the intermediate ring gears 38 and 48 and that neither set of lateral teeth is engaged. By means of the selector means described above, the transfer ring gear 32 is displaced in a direction toward the intermediate ring gear 38 and away from the intermediate ring gear 48, ie to its forward position. The lateral teeth 36 and 40 will commence engaging. When they commence engaging, and pressure is applied when drive is trasmitted in a forward direction, the transfer ring gear 32 will be drawn into the intermediate ring gear 38 on account of the obliqueness of the interengaging faces of the teeth to enhance integrity of engagement.

In the event of relative rotation in a reverse direction i.e. when that portion of the intermediate ring gear 38 shown in Figure 2 moves upwardly and that portion of the transfer ring gear 32 shown in Figure 2 moves downwardly, the shape of the teeth will generate a parting force tending to thrust the transfer ring gear 32 away from the intermediate ring gear 38 and toward the intermediate ring gear 48 with which positive engagement is effected, similarly as described above, for rotation in the reverse direction. It is however to be appreciated that force exerted by the selector means will govern, and that forces generated on account of the obliqueness of the surfaces of the teeth can cause corresponding displacement of the transfer ring gear 32 only when the selector means allows such displacement.

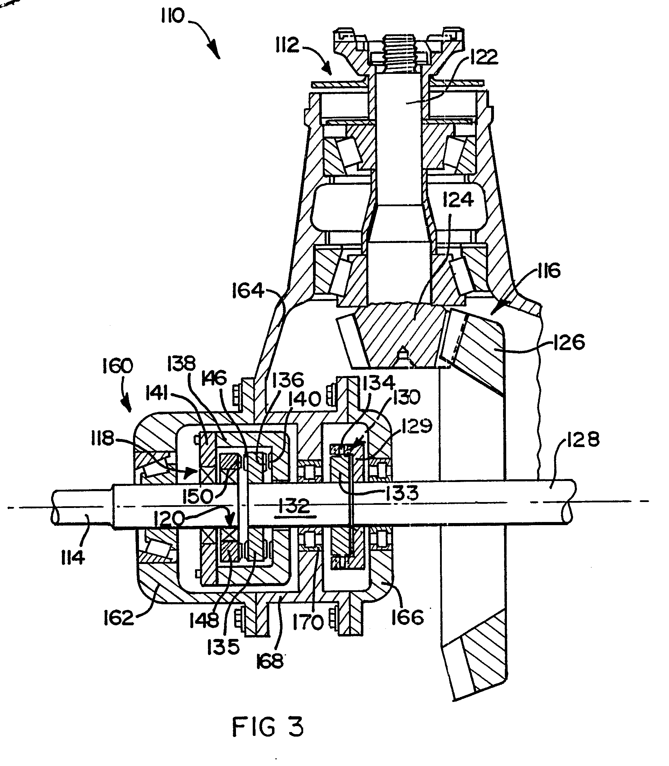

With reference to Figure 3, a developed embodiment of a differential speed gear system in accordance with the invention is generally indicated by reference numeral 110. Generally, the differential speed gear system 110 has the same features as the differential speed gear system 10 of Figure 1. Those features are not all again described in detail and like reference numerals refer to like parts. Emphasis will merely be placed on those aspects in respect of which the differential speed gear system 110 differs from the differential speed gear system 10.

The crown wheel 126 is fixed to a central shaft 128. The shaft 128 is common to both sides of the differential speed gear system 110 of which only the one side is shown in Figure 3. Only that one side is described further.

The shaft 128 is co-axial with the side shaft 114. Coaxial with and arranged intermediate the side shaft 114 and the central shaft 128, there is provided a transfer shaft 132 arranged to have lost motion in an axial direction.

At adjacent ends of the central shaft 128 and the transfer shaft 132, they have flanges respectively 129 and 133 which are contiguous. The flange 129 has a concentric sleeve portion within which a plurality of circumferentially spaced oblique slots 130 are provided. The direction in which the slots slant is predetermined as will become apparent hereinafter. The flange 133 has in correspondingly circumferentially spaced positions, radially outwardly extending drive pins 134 snugly received within the slots 130. The pins 134 can slide along the slots which will cause simultaneously a pivoting and an axial movement of the transfer shaft 132. The drive pins 134 thus act as cam means in accordance with the invention.

, In use, when drive is transmitted via the crown wheel 126 and central shaft 128 to the flange 129 having the slots 130, rotational drive is transferred via the pins 134 to the flange 133 and thus to the transfer shaft 132. Simultaneously, the transfer shaft 132 is automatically, axially displaced in a predetermined direction dependant from the direction of rotation of the central shaft 128 and the direction of slant of the slots 130 to take up the lost motion.

At its outboard end, the transfer shaft 132 has a flange 135 and, at opposed sides thereof, axially facing gear rings 136 and 146.

Associated with the side shaft 114, there is provided the forward overrun device 118 mounted between the side shaft 114 and a flange 141. A concentric sleeve 138 extending axially inwardly from, and drivingly connected to the flange 141 has, at its inboard end, radially inwardly directed flange mounting a concentric gear ring 140 complemental to and in register with the gear ring 136.

At the inboard end of the side shaft 114, there is provided a sleeve 148 which is connected via a reverse overrun device 120 to the side shaft 114 and which has a gear ring 150 complemental to and in register with the gear ring 146.

When the differential speed gear system 110 is driven in a forward rotation direction, as described above, the transfer shaft 132 is driven in a corresponding rotation direction and is displaced axially inwardly to cause the gear ring 136 drivingly · to engage the gear ring 140. The gear ring 140 drives, via the sleeve 138 and the flange 141 and the forward overrun device 118, the side shaft 114 in a corresponding rotation direction. The drive shaft 114 is allowed to free-wheel in said rotation direction by the overrun device 118.

If the differential speed gear system 110 is driven in an opposite rotation direction, the transfer shaft 12 is axially moved outwardly as described above. Thus, first, the gear ring 136 disengages from the gear ring 140. Second, the gear ring 146 engages and drivingly engages the gear ring 150 of the sleeve 148 thus driving the shaft 114 in a corresponding rotation direction via the reverse overrun device 120 which allows free-wheeling.

For completeness, it is to be noted that the components described above are encased in a casing 160 which has an outboard end portion 162 having a bearing within which the side shaft 114 is drivingly supported. The outboard end portion 162 is bolted to an intermediate portion 168 which, in this embodiment, is shown to be integral with a casing surrounding the input shaft 122, more specifically via a flange 164 thereof. In other embodiments, the interim portion 168 may merely be mounted on the casing surrounding the input shaft 122. An inboard end portion 166 is bolted to the intermediate portion 168. The inboard end portion 166 has a bearing within which the central shaft 128 is rotatingly supported.

The transfer shaft 132 is rotatingly supported in the interim portion 168 via an inboard bearing 170. The bearing 170 is adapted to allow axial displacement of the transfer shaft 132 relative thereto.

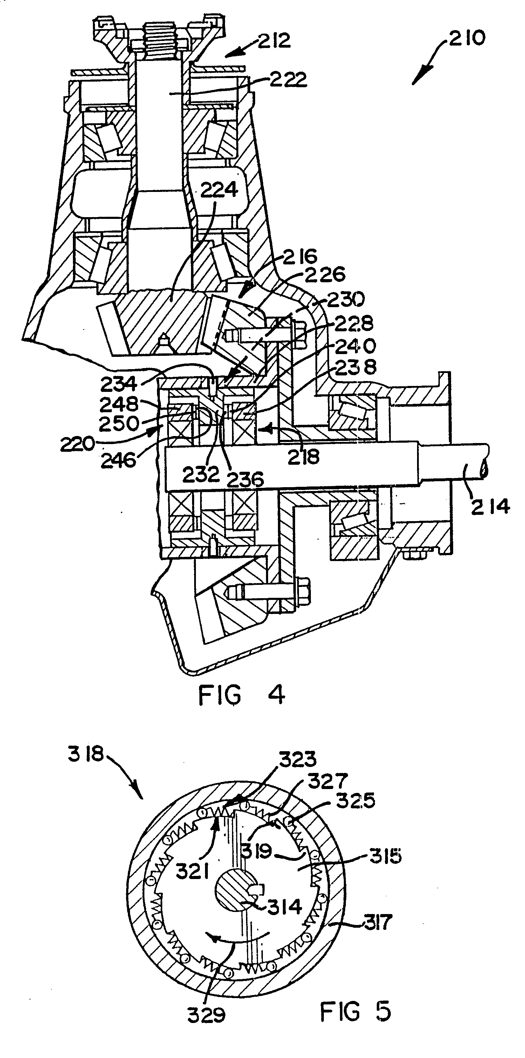

With reference to Figure 4, yet a further developed embodiment of a differential speed gear system in accordance with the invention is generally indicated by reference numeral 210. Generally, the gear system 210 has the same features as the gear systems 10 and 110 and is thus not again described in detail. Like reference numerals refer to like parts and emphasis will merely be placed on those aspects in which the system 210 differs from the systems already described.

The input shaft 222 drives a crown wheel 226 via a pinion 224. The crown wheel is drivingly connected to a hollow shaft 228 which is concentric with the side shaft 214.

Toward an inboard end of the side shaft 214, there are provided forward and reverse overrun devices 218, 220. Flanges respectively 238 and 248 are drivingly connected via the drive transmitting means 218, 220 to the side shaft 214, respectively for driving connection in opposed rotational directions. Each flange 238, 248 has a concentric gear ring, respectively 240 and 250.

Within the hollow shaft 228, there is provided a transfer hollow shaft 232 which is axially displaceable within the hollow shaft 228 within limits. The hollow shaft 232 has a central inwardly extending flange having, at opposed sides thereof, gear rings respectively 236 and 246 complemental to and in register with the respective gear rings 240 and 250.

The hollow shaft 228 defines circumferentially spaced oblique slots 230 which slant in a predetermined direction.

The transfer shaft 232 has a corresponding plurality of drive pins 234 snugly, slidably received within the slots 230.

In use, when drive is transmitted in a forward direction from the input shaft 222, the drive pins 234 slide along the slots 230 in a direction corresponding to the direction of rotation thus rotationally driving the transfer shaft 232. Simultaneously on account of the slant of the slots 230, the transfer shaft 232 is axially displaced in a direction corresponding to the direction of rotation i.e. toward the flange 238, to take up lost motion. The gear rings 236 and 240 drivingly engage to transmit drive via the overrun device 218 to the side shaft 214. Free-wheeling of the side shaft 214 is allowed by the overrun device 218.

For rotation in an opposite (reverse) direction, the transfer shaft 232 is axially displaced away from the flange 238 to interrupt driving inter-engagement between the gear rings 236 and 240 and to cause driving interconnection between the gear rings 246, 250 to cause transmission of drive via the reverse transmitting means 220 in the reverse direction to the side shaft 214. Free-wheeling of the drive shaft 214 is allowed by the drive transmitting means 220.

It is a feature of the device 210 that only little lost motion of the transfer shaft 232 is allowed. Thus, even if drivingly disconnected, light friction still exists between opposing friction rings. This operates in the manner of a synchro-mesh ring which enhances smooth operation of the device 210.

It is further an advantage that the device 210 can easily be manufactured and that the manufacturing cost is expected to be low. The low manufacturing cost is made possible, inter alia, by the use of slanted slots and drive pins rather than by means of helical gear teeth as with the device 10 of Figure 1.

Furthermore, the device 210 is compact and it is expected that use can be made of components which are available in the trade.

Functionally, the device 210 has the same advantages as the device 10.

Figure 5 illustrates a simplified embodiment of the kind of overrun device which can advantageously be used in exploitation of this invention.

The device 318 is mounted on a shaft 314 driving in a direction 329.

The device 318 is generally concentric and comprises an inner wheel 315 having peripheral cogs or teeth 319 slanted in a direction opposite to the direction 329. Slanted outer sides of the teeth 319 are shown at 321.

The device 318 further comprises an outer sleeve 317. Passages 323 are formed between the sides 321 and the inner periphery of the sleeve 317. The passages 323 converge in a direction opposite to the direction 329.

Balls or rollers 325 are provided associated with the respective teeth 319 and located in the respective passages 323. Springs 327 operatively in compression bias the rollers 325 toward the convergent ends of the passages.

In operation, when the shaft 314 drives in the direction 329, the rollers are pinched or wedged in the passages 323 frictionally to connect the sleeve 317 to the wheel 315 to be driven in the direction 329.

In the event of the sleeve 317 tending to overrun the wheel 315, the rollers 325 are displaced toward the divergent ends of the passages 325, thus breaking frictional contact and allowing the sleeve 317 to overrun the wheel 315.

It is significant that small clearances are provided between the rollers 323 and the sides of the passages 323 at their divergent ends and that little lost motion is allowed. Engagement by way of friction allows this. This feature enhances smoothness of operation of the overrun device in the context of this invention.

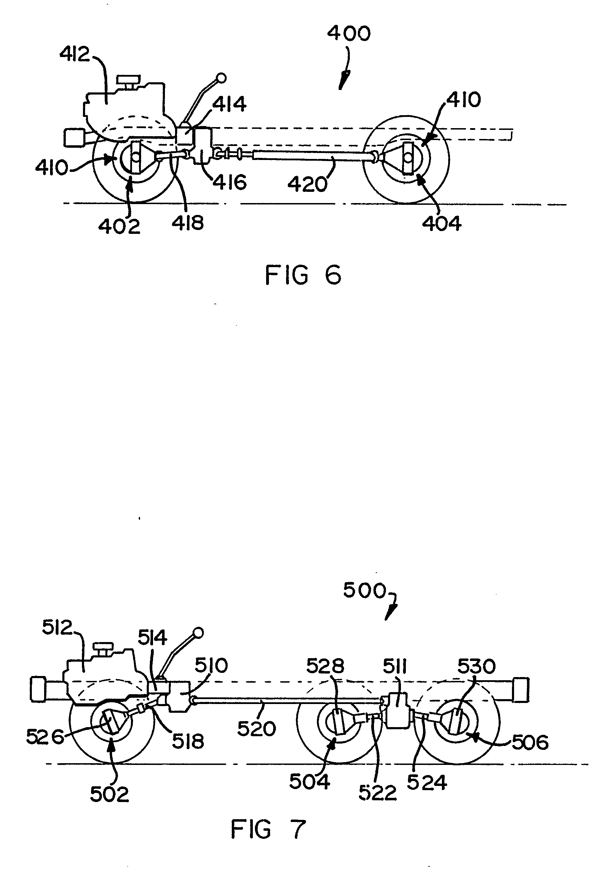

With reference to Figure 6, a vehicle 400 has two wheeled axles 402, 404, both of which are driven from a motor 412.

Each wheeled axle incorporates a differential speed gear device 410 in accordance with this invention. Fore and rear drive shafts 418, 420 permanently couple the differential speed gear devices 410 via a transfer case 416 and gear box 414 to the motor 412. It is to be appreciated that the transfer case 416 is permanently coupled and is not capable of differential action. This configuration is made possible by the ability of both side shafts of each differential speed gear device 410 to freewheel simultaneously. This configuration has the advantage of permanent coupling without requiring differential action at the transfer case, and still retaining the advantage of allowing differential speed between the axles without winding up.

With reference to Figure 7, a three axle vehicle 500 driving on all three axles are shown. Each axle 502, 504, 506 incorporates a conventional differential gear 526, 528, 530. The differential gears are driving via transfer cases 510, 511 each incorporating a differential speed gear device in accordance with this invention. A motor 512 drives the transfer case 510 via gear box 514. The transfer case 510 can accommodate differential speed between its output shafts 518, 520 by allowing the faster rotating shaft to freewheel. Similarly, the transfer case 511 can accommodate differential speed between its output shafts 522, 524 by allowing the faster rotating one to freewheel.

**Claims**

1. A differential speed gear device (10, 110), 210) comprising a drive shaft (22, 122, 222) and first and second driven shafts (14, 114, 214) characterised in that it includes
forward drive transmission means including first and second forward overrun devices (18, 118, 218) respectively for the first and second driven shafts (14, 114, 214) and adapted to transmit drive proportionally to the speed of the input (22, 122, 222) and such as to allow overrunning in one predetermined direction only;
reverse drive transmission means including first and second reverse overrun devices (20, 120, 220) respectively for the first and second driven shafts (14, 114, 214) and adapted to transmit drive proportionally to the speed of the input (22, 122, 222) and to allow overrunning in one direction opposite to said predetermined direction only; and
selector means (30, 34; 134; 230, 234) responsive to the direction of rotation of the drive shaft (22, 122, 222) automatically to effect coupling of an appropriate one of the forward and reverse drive transmission means between the drive shaft (22, 122, 222) and each of the first and second driven shafts (14, 114, 214).

2. A differential speed gear device as claimed in Claim 1, characterized in that each of the overrun devices (18, 118, 218; 20, 120, 220) comprises a drive component (315) and a driven component (317) which are concentric, and which are frictionally lockable to effect drive and releasable to allow overrunning in the respective one direction only.

3. A differential speed gear device as claimed in Claim 1, characterised in that the first forward (18, 118, 218) the first reverse (20, 120, 220) overrun devices are axially spaced, in which the second forward and second reverse overrun devices are axially spaced, and in which the selector means (30, 34: 130, 134; 230, 234) includes
a first transfer member (32, 132, 232) drivingly connected to the drive shaft (22, 122, 222) and axially displaceable between a forward position, in which it is drivingly engaged with the first forward overrun device (18, 118, 218) and released from the first reverse overrun device (20, 120, 220), and a reverse position, in which it is drivingly engaged with the first reverse overrun device (20), 120, 220) and released from the first forward overrun device (18, 118, 218);
a second transfer member drivingly connected to the drive shaft (22, 122, 222) and axially displaceable between a forward position, in which it is drivingly engaged with the second forward overrun device and released from the second reverse overrun device, and a reverse position, in which it is drivingly engaged with the second reverse overrun device and released from the second forward overrun device; and
cam means (30, 34; 139, 134; 230, 234) responsive to the direction of rotation of the drive shaft (22, 122, 222) to displace the first (32, 132, 232) and second transfer members respectively toward their forward and reverse positions.

4. A vehicle (400) having a plurality of axles (402, 404) of which at least two (402, 404) are driven, each driven axle being associated with a differential speed gear device (410) as claimed in Claim 1, characterised in that the drive shaft (418, 420) of each differential speed gear device (410) is permanently drivingly connected to a drive motor (412) of the vehicle (400).

5. A vehicle (500) having a plurality of axles (502, 504) of which at least two (502, 504) are driven, the vehicle (500) comprising a transfer case (510), characterised in that the transfer case (510) includes a differential speed gear device as claimed in Claim 1, a drive motor (512) of the vehicle (500) being drivingly connected to a drive shaft of the differential speed gear device, and driven shafts (518, 520) of the differential speed gear device leading respectively to the driven axles (502, 504)

FIG 1

FIG 2

FIG 3

FIG 4

FIG 5

FIG 6

FIG 7